# FASCICULE DE BREVET EUROPEEN

(11) **EP 0 491 590 B1**
(45) Date de publication et mention de la délivrance du brevet: **24.08.1994**
(21) Numéro de dépôt: 91403200.8
(22) Date de dépôt: 26.11.1991
(51) Int. Cl.: B60H 1/00

(54) **Dispositif de fixation destiné à maintenir un groupe de climatisation contre la caisse d'un véhicule automobile**
Befestigungsvorrichtung zum Halten einer Klimaanlage am Chassis eines Automobils
Fastening device for holding an air-conditioning device on the body of an automotive car

(30) Priorité: 19.12.1990 FR 9015950
(43) Date de publication de la demande: 24.06.1992
(73) Titulaire: AUTOMOBILES PEUGEOT, 75116 Paris (FR); AUTOMOBILES CITROEN, 92200 Neuilly-sur-Seine (FR)
(72) Inventeur: Borianne, Christophe, F-25200 Montbeliard (FR)
(74) Mandataire: Berger, Helmut

(56) Documents cités:
- DE-C- 3 835 543
- FR-A- 2 608 101

## Description

La présente invention concerne un dispositif de fixation pour maintenir un organe, tel qu'un groupe de climatisation, contre une partie fixe, telle que la caisse d'un véhicule automobile.

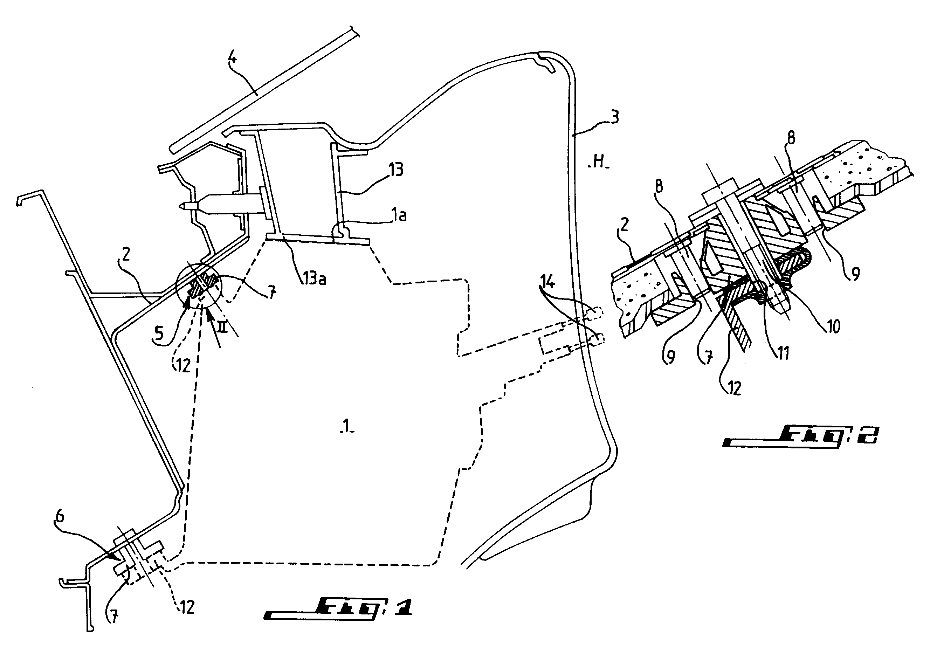

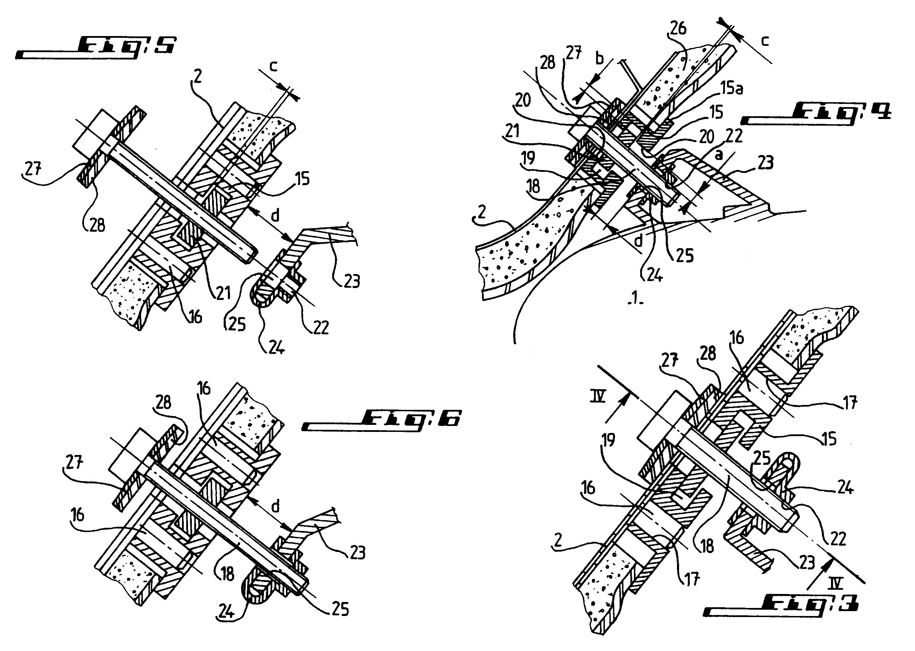

Les figures 1 et 2 représentent un dispositif connu permettant de fixer un groupe de climatisation 1 à un tablier 2 solidaire de la caisse (non représentée) d'un véhicule automobile et sous la planche de bord 3 située dans l'habitacle H du véhicule, la référence 4 désignant le pare-brise de celui-ci. Comme représenté, le groupe de climatisation 1 est fixé au tablier 2 à deux points de fixation identiques respectivement supérieur 5 et inférieur 6. Chaque point de fixation 5, 6 comprend une entretoise 7 fixée au tablier 2 par l'intermédiaire de deux pieds parallèles de fixation 8 solidarisés au tablier 2 par exemple par soudage et engagés avec ajustement serré respectivement dans deux alésages 9 de l'entretoise 7 et une vis de fixation 10 traversant avec un jeu radial l'entretoise 7 et dont l'extrémité est vissée dans un trou taraudé 11 réalisé dans une patte de fixation 12 solidaire du groupe de climatisation 1, étant bien entendu que le trou taraudé peut être réalisé dans un écrou solidaire de cette patte. Normalement, les tolérances de fabrication doivent être telles que le groupe de climatisation 1 soit en appui plan par sa face d'appui 1a contre l'embouchure 13a du conduit de dégivrage 13 et que les pattes d'attache 12 soient également en appui plan contre les entretoises correspondantes 7. Cependant, ces tolérances de fabrication sont difficiles à respecter de sorte qu'il existe pratiquement toujours des situations défavorables où le groupe de climatisation 1 est fixé sans être au moins correctement en appui contre l'embouchure 13a du conduit 13, ce qui se traduit par un mauvais dégivrage, des bruits à l'intérieur de l'habitacle, des fuites, etc ..., et une forte contrainte exercée par les vis 10 sur les pattes de fixation du fait du jeu existant entre l'entretoise 7 et chaque patte 12, ce qui risque de provoquer une rupture de chaque patte d'attache 12, un déboîtement des conduits allant aux diffuseurs latéraux du véhicule, un désalignement et des efforts exagérés sur les commandes 14 du groupe de climatisation 1 situées sur la planche de bord 3.

La présente invention a pour but d'éliminer l'inconvénient ci-dessus en proprosant un dispositif de fixation pour maintenir un organe, tel qu'un groupe de climatisation, contre une partie fixe, telle que la caisse d'un véhicule automobile, du type comprenant au moins une vis, dont la tige filetée traverse avec un jeu radial important une entretoise solidaire de la partie fixe et dont l'extrémité est vissée dans un trou taraudé de l'organe ou d'une pièce solidaire de ce dernier, dispositif caractérisé en ce qu'il comprend un écrou logé avec un jeu axial faible et avec un jeu radial relativement important dans un évidement pratiqué dans l'entretoise et qui coopère avec la vis en serrant l'entretoise contre la partie fixe et en ce que l'extrémité de la vis coopérant avec le trou taraudé maintient celui-ci à une distance par rapport à l'entretoise déterminée par mise en appui préalable de l'organe contre la partie fixe.

De préférence, les jeux radiaux respectivement de l'écrou et de la tige filetée de la vis sont sensiblement égaux.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels.

La figure 1 représente de façon schématique un dispositif connu de fixation d'un groupe de climatisation sous le tableau de bord d'un véhicule automobile.

La figure 2 est une vue agrandie détaillée de la partie cerclée en II de la figure 1.

La figure 3 est une vue agrandie comme en figure 2 d'un dispositif de fixation suivant l'invention.

La figure 4 est une vue agrandie en coupe suivant la ligne IV-IV de la figure 3.

Les figures 5 et 6 sont des vues semblables à la figure 3 représentant l'assemblage du groupe de climatisation au tablier du véhicule automobile par le dispositif de l'invention.

L'invention va être décrite en référence au montage et à la fixation d'un groupe de climatisation 1 à un tablier 2 solidaire de la caisse (non représentée) d'un véhicule automobile, mais il est bien entendu qu'elle peut s'appliquer également à l'assemblage et fixation de tout autre organe à une partie fixe.

En se reportant aux figures 3 à 6, le dispositif de fixation conforme à l'invention comprend une entretoise ou plot 15 qui est solidarisé au tablier 2, avant montage de l'ensemble formé par le groupe de climatisation 1 et la planche du bord 3, par deux pieds parallèles de fixation 13 fixés par exemple par soudage au tablier 2 et engagés par un ajustement serré respectivement dans deux alésages 16 de l'entretoise 15. Le dispositif comprend de plus une vis de fixation 18, dont la tige filetée traverse avec un jeu radial a relativement important l'entretoise 15 qui comporte un évidement ou chambre intermédiaire 19 entre les deux perçages coaxiaux opposés 20 de l'entretoise 15 pour le passage de la tige filetée de la vis 18. L'évidement 19 contient un écrou 21 à travers lequel est vissée la vis 18 et ayant un jeu radial b par rapport à l'entretoise 15 relativement important et, de préférence, sensiblement égal au jeu radial a. L'écrou 21 est rectangulaire de manière à ne pas pouvoir tourner dans l'évidement 19 également rectangulaire. Il est de plus logé dans l'évidement 19 suivant un jeu axial c par rapport à l'entretoise 15 relativement faible. L'extrémité de la tige filetée de la vis 18 est vissée dans un trou taraudé 22 d'une patte de fixation 23 solidaire du châssis du groupe de climatisation 1. Dans le cas présent, le trou taraudé est réalisé dans une pièce formant agrafe 24 fixée à la patte de fixation 23 de façon que le trou taraudé 22 soit coaxial au perçage 25 de la patte 23 pour le passage de la tige filetée de la vis 18. Cependant, le trou taraudé peut être réalisé directement dans la patte 23 à l'endroit du perçage 25 ou dans une paroi plane usinée du groupe de climatisation 1 sensiblement perpendiculaire à l'axe de l'entretoise 15. En position assemblée du groupe de climatisation 1 au tablier 2, l'écrou 21 serre l'entretoise 15 contre le tablier 2 et l'extrémité de la vis 18 coopère avec le trou taraudé 22 de façon à maintenir ce dernier à une distance d, par rapport à l'entretoise 15, déterminée par mise en appui préalable de la face 1a de l'organe 1 contre l'embouchure 13a du conduit de dégivrage 13 solidaire du tablier 2 (voir figure 1). On notera également que l'entretoise 15 comporte une partie formant collerette 15a permettant de maintenir contre le tablier 2 un panneau d'insonorisation 26. Si nécessaire, il est possible de prévoir au moins deux vis de fixation coopérant respectivement avec deux écrous 21 logés respectivement dans deux entretoises 15 et avec deux trous taraudés 22 de deux pattes de fixation 23 solidaires du groupe de climatisation 1.

Le principe de montage du dispositif conforme à l'invention résulte déjà de la description qui en a été faite ci-dessus et va être maintenant expliqué brièvement.

L'entretoise 15 est tout d'abord assemblée par les pieds 16 au tablier 2 du véhicule par l'intérieur de l'habitacle de celui-ci. L'ensemble constitué par la planche de bord 3 préalablement assemblée avec le groupe de climatisation 1 est ensuite positionné relativement au tablier 2 de façon à amener la face d'appui 1a du groupe 1 contre l'embouchure correspondante 13a du conduit de dégivrage 13. Ce positionnement est représenté en figure 5 qui montre la distance résultante d, laquelle varie d'un véhicule à l'autre du fait des tolérances de fabrication de la caisse, de la planche du bord 3 et du groupe de climatisation. Pour fixer le groupe de climatisation 1 au tablier 2, la vis 18, qui est vissée au travers de l'entretoise 15 dans l'écrou 21 arrêté en rotation dans l'évidement 19, peut être déplacée radialement dans l'entretoise 15 de façon à chercher le trou de passage 25 de la patte 23 au-dessus du trou taraudé 22 de l'agrafe 24. Une fois le trou de passage trouvé, la vis 18 peut être vissée dans le trou taraudé 22 de l'agrafe 24 et lorsque la tête de la vis 18 touche le tablier 2 par l'intermédiaire d'une rondelle métallique 27 superposée à une rondelle souple 28, le serrage de l'entretoise 15 sur le tablier 2 s'exerce entre la rondelle 27 et l'écrou 21. La distance d est ainsi maintenue abstraction faite du très léger déplacement axial c de l'écrou 21 dans l'entretoise 15 en fin de serrage. Le groupe de climatisation 1 est donc immobilisé avec pour seul jeu celui entre l'agrafe 24 et le filet de la vis 18, ce jeu pouvant être supprimé par utilisation d'une agrafe du type auto-freiné.

Le dispositif de fixation conforme à l'invention permet de fixer le groupe de climatisation sans le contraindre, donc sans le fragiliser, est une conception très simple et est facile à mettre en oeuvre.

## Revendications

1. Dispositif de fixation pour maintenir un organe, tel qu'un groupe de climatisation (1), contre une partie fixe, telle que la caisse (2) d'un véhicule automobile, du type comprenant au moins une vis (18), dont la tige filetée traverse avec un jeu radial important a une entretoise (15) solidaire de la partie fixe (2) et dont l'extrémité est vissée dans un trou taraudé (22) de l'organe (1) ou d'une pièce (22) solidaire de ce dernier, caractérisé en ce qu'il comprend un écrou (21) logé avec un jeu axial c faible et avec un jeu radial b relativement important dans un évidement (19) pratiqué dans l'entretoise (15) et qui coopère avec la vis (18), en serrant l'entretoise (15) contre la partie fixe (2) et en ce que l'extrémité de la vis (18) coopérant avec le trou taraudé (22) maintient celui-ci à une distance d par rapport à l'entretoise (15) déterminée par mise en appui préalable de l'organe (1) contre la partie fixe (2).

2. Dispositif selon la revendication 1, caractérisé en ce que les jeux radiaux a et b respectivement de l'écrou (21) et de la vis (18) sont sensiblement égaux.

3. Dispositif selon la revendication 1 ou 2, caractérisé en ce que l'écrou (21) est arrêté en rotation dans l'évidement (19).

## Claims

1. Fastening device for holding a member such as an air-conditioning set (1) onto a stationary part such as the body (2) of an automotive vehicle, of the type comprising at least one screw (18) the threaded shank of which extends with a substantial radial play a through a brace (15) made fast to the stationary part (2) and the end of which is screwed into a tapped hole (22) of the member (1) or of a part (22) made fast to the latter, characterized in that it comprises a nut (21) accommodated with a small axial play c and with a relatively substantial radial play b in a recess (19) formed in the brace (15) and which co-operates with the screw (18) while clamping the brace (15) onto the stationary part (2) and in that the end of the screw (18) co-operating with the tapped hole (22) keeps the latter at a distance d with respect to the brace (15) determined by previously causing the member (1) to bear upon the stationary part (2).

2. Device according to claim 1, characterized in that the radial plays a and b of the nut (21) and of the screw (18), respectively, are substantially equal.

3. Device according to claim 1 or 2, characterized in that the nut (21) is locked against rotation in the recess (19).

## Patentansprüche

1. Befestigungsvorrichtung zur Halterung eines Gerätes, wie eines Klimatisierungsaggregates (1), an einem ortsfesten Teil, wie dem Kasten (2) eines Kraftfahrzeugs, derjenigen Gattung, mit wenigstens einer Schraube (18), deren Gewindeschaft einen mit dem ortsfesten Teil (2) fest verbundenen Steg (15) mit einem grossen radialen Spiel a durchsetzt und dessen Ende in einem Gewindeloch (22) des Gerätes (1) oder eines mit dem letzteren fest verbundenen Werkstücks (22) eingeschraubt ist, dadurch gekennzeichnet, dass sie eine in einer in dem Steg (15) gebildeten Aussparung (19) mit einem schwachen axialen Spiel c und einem verhältnismässig grossen radialen Spiel b untergebrachte Mutter (21), die mit der Schraube (18) zusammenwirkt unter Anzug des Steges (15) an den ortsfesten Teil (2) aufweist und dass das Ende der mit dem Gewindeloch (22) zusammenwirkenden Schraube (18) dieses Loch in einem durch die vorherige Abstützung des Gerätes (1) an dem ortsfesten Teil (2) bestimmten Abstand d in bezug auf den Steg (15) hält.

2. Vorrichtung nach Anspruch 1, dadurch gekennzeichnet, dass die radialen Spiele a und b jeweils der Mutter (21) und der Schraube (18) etwa gleich sind.

3. Vorrichtung nach Anspruch 1 oder 2, dadurch gekennzeichnet, dass die Mutter (21) in der Aussparung (19) gegen Drehung gesichert ist.
